(19) **Europäisches Patentamt / European Patent Office / Office européen des brevets**

(11) **EP 3 775 873 B1**

(12) **FASCICULE DE BREVET EUROPEEN**

(45) Date de publication et mention de la délivrance du brevet:
**14.05.2025 Bulletin 2025/20**

(21) Numéro de dépôt: **19720994.3**

(22) Date de dépôt: **08.04.2019**

(51) Classification Internationale des Brevets (IPC):
**G01N 30/86** *(2006.01)*    **G01N 30/90** *(2006.01)*
**B01D 15/16** *(2006.01)*

(52) Classification Coopérative des Brevets (CPC):
**G01N 30/8658; G01N 30/8672; G01N 30/8679; G01N 30/90;** B01D 15/165

(86) Numéro de dépôt international:
**PCT/FR2019/050823**

(87) Numéro de publication internationale:
**WO 2019/193300 (10.10.2019 Gazette 2019/41)**

(54) **PROCEDE ET SYSTEME DE PILOTAGE D'UNE CHROMATOGRAPHIE LIQUIDE PREPARATIVE**

VERFAHREN UND SYSTEM ZUR STEUERUNG DER VORBEREITENDEN FLÜSSIGKEITSCHROMATOGRAPHIE

METHOD AND SYSTEM FOR CONTROLLING PREPARATIVE LIQUID CHROMATOGRAPHY

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **06.04.2018 FR 1853044**

(43) Date de publication de la demande:
**17.02.2021 Bulletin 2021/07**

(73) Titulaire: **Interchim S.A.**
**03100 Montluçon (FR)**

(72) Inventeurs:
• **BOCH, Lionel**
  **03630 DESERTINES (FR)**
• **CHARBONNEAU, Didier**
  **03100 MONTLUCON (FR)**
• **TCHAPLA, Alain**
  **91940 LES ULIS (FR)**
• **DESQUAIRES, Dominique**
  **03410 LIGNEROLLES (FR)**
• **MERCIER, Olivier**
  **03100 MONTLUCON (FR)**
• **POURCHERESSE, Yann**
  **03500 SAINT POURCAIN SUR SIOULE (FR)**
• **QUETANT, Nicolas**
  **03310 DURDAT LAREQUILLE (FR)**

(74) Mandataire: **Regimbeau**
**20, rue de Chazelles**
**75847 Paris Cedex 17 (FR)**

(56) Documents cités:
**US-A1- 2005 247 625    US-B1- 6 413 431**
**US-B2- 7 686 959**

• **FAIR J D ET AL: "Flash column chromatograms estimated from thin-layer chromatography data", JOURNAL OF CHROMATOGRAPHY A, ELSEVIER, AMSTERDAM, NL, vol. 1211, no. 1-2, 21 November 2008 (2008-11-21), pages 49 - 54, XP025589324, ISSN: 0021-9673, [retrieved on 20081001], DOI: 10.1016/J.CHROMA.2008.09.085**
• **HÉRON SYLVIE ET AL: "A new methodology to determine the isoeluotropic conditions on ultra-performance flash purification stationary phases from analytical reversed liquid chromatography stationary phase", JOURNAL OF CHROMATOGRAPHY A, ELSEVIER, AMSTERDAM, NL, vol. 1397, 11 April 2015 (2015-04-11), pages 59 - 72, XP029155533, ISSN: 0021-9673, DOI: 10.1016/J.CHROMA.2015.04.017**

**Description**

**DOMAINE DE L'INVENTION**

La présente invention concerne un procédé et un système de pilotage d'une chromatographie liquide préparative, de la basse à la haute pression.

**ETAT DE LA TECHNIQUE**

La chromatographie liquide préparative est un procédé d'isolement, de purification ou d'enrichissement d'un mélange de composés qui, pour être optimal, nécessite la sélection d'un certain nombre de paramètres en ce qui concerne l'outil de séparation utilisé (diamètre intérieur, longueur, phase stationnaire, granulométrie...) et les conditions opératoires (phase mobile, type d'élution, débit, température, mode d'injection, quantité injectée...). Le choix de ces paramètres relève souvent d'un compromis de productivité entre le taux de pureté souhaité, la quantité de produit pur souhaitée, le coût et la durée du procédé de purification.

Pour effectuer ce choix, il est connu d'utiliser des résultats de séparation obtenus, pour un échantillon de même nature, avec un système chromatographique analytique, et de les transposer à la chromatographie liquide préparative. Le terme anglo-saxon « scale-up » définit ainsi un coefficient multiplicateur entre la quantité d'échantillon traitée en chromatographie liquide analytique et la quantité d'échantillon traité en chromatographie liquide préparative.

Cependant, le système de chromatographie liquide analytique est bien différent de celui de la chromatographie liquide préparative en termes de phase stationnaire et de conditions opératoires, de sorte que cette transposition est relativement complexe. Des outils de calcul ont donc été conçus pour faciliter cette transposition.

Ainsi, le document US 7,686,959 décrit un procédé mis en oeuvre par ordinateur utilisant des données de chromatographie sur couche mince (CCM ou TLC, acronyme du terme anglo-saxon « Thin Layer Chromatography ») pour calculer des conditions opératoires de chromatographie préparative. Plus précisément, ce document enseigne le calcul, à partir d'une chromatographie sur couche mince, du rapport frontal $R_{f1}$, $R_{f2}$ pour deux composés de l'échantillon à purifier, le calcul de volumes de colonne $CV_1$, $CV_2$ pour chacun desdits composés à partir de leur rapport frontal respectif (chaque volume de colonne étant égal à l'inverse du rapport frontal respectif), et le calcul d'un facteur $\Delta CV$ de la colonne défini comme étant la différence entre les volumes $CV_2$ et $CV_1$. Or, ce facteur $\Delta CV$ est propre à chaque colonne, ce qui nécessite un grand nombre de calculs pour déterminer la colonne optimale. Par ailleurs, ce procédé nécessite un grand nombre d'interventions de l'utilisateur (entrées de données), ce qui suppose que l'utilisateur ait de solides connaissances en chromatographie.

Le document US6413431 décrit un procédé dans lequel on effectue une chromatographie analytique HPLC ou CCM, et où on détermine, à partir des données de chromatographie analytique, des conditions opératoires de chromatographie préparative.

Or, dans la mesure où un opérateur chargé d'effectuer une purification en chromatographie liquide préparative n'est pas nécessairement un spécialiste de la chromatographie, il serait utile d'offrir un procédé et un système de pilotage qui soit plus automatisé et qui ne nécessite qu'un minimum d'interventions de l'opérateur.

**EXPOSE DE L'INVENTION**

Le but de l'invention est donc de concevoir un procédé de pilotage d'une chromatographie liquide préparative qui puisse être mis en œuvre par un utilisateur novice en chromatographie, en minimisant la quantité de données à entrer manuellement pour déterminer l'outil de séparation et les conditions de purification optimales et suffisantes en fonction du résultat attendu.

L'invention est définie dans les revendications.

A cet effet, l'invention propose un procédé de pilotage d'une chromatographie liquide préparative, comprenant les étapes suivantes, au moins une partie desdites étapes étant mises en oeuvre par un ordinateur comprenant un processeur et un écran d'affichage couplé audit processeur:

(a) la sélection, par l'intermédiaire d'une interface, d'un procédé de chromatographie liquide analytique parmi la chromatographie sur couche mince (CCM) et la chromatographie en phase liquide à haute performance (HPLC),
(b) l'entrée de données de chromatographie liquide analytique obtenues par le procédé sélectionné à l'étape (a) pour un produit à purifier,
(c) l'accès à une table d'outils de séparation disponibles chez l'utilisateur pour mettre en oeuvre ladite chromatographie liquide préparative, lesdits outils étant des colonnes, des cartouches ou d'autres dispositifs de chromatographie comprenant une phase stationnaire,
(d) à partir desdites données de chromatographie liquide analytique et de la table des outils de séparation disponibles, la sélection d'un outil de séparation optimal dans ladite table et le calcul de conditions opératoires de chromatographie liquide préparative sur ledit outil de séparation sélectionné. Cette étape inclut notamment la détermination d'un profil de gradient adapté.

Le procédé comprend en outre une étape de réception de la quantité de produit à purifier.

Selon un mode de réalisation, le procédé comprend en outre une étape de sélection du mode d'introduction du produit à purifier sur l'outil de séparation sélectionné, ledit mode d'introduction étant choisi parmi une introduction en solution ou un dépôt solide.

De manière avantageuse, le procédé comprend également une étape de validation du calcul par un utilisateur, et après ladite validation, une étape de lancement de la chromatographie liquide préparative sur l'outil de séparation sélectionné.

Selon une forme d'exécution, le procédé comprend l'enclenchement par un utilisateur d'une accélération de la chromatographie liquide préparative. L'étape (d) comprend alors le calcul des conditions opératoires optimisées en tenant compte du débit maximum et de la pression limite du système de chromatographie liquide préparative dans lequel l'outil de séparation sélectionné est mis en œuvre.

Selon un mode de réalisation, le procédé sélectionné à l'étape (a) est la chromatographie sur couche mince (CCM). L'étape (b) comprend alors l'entrée de données analytiques obtenues sur une plaque de chromatographie sur couche mince.

De préférence, la sélection et le calcul mis en œuvre à l'étape (d) prennent en compte quatre cas différents selon les valeurs de facteur de rétention Rf de la plaque :

$$0{,}01 < Rf < 0{,}07,$$

$$0{,}08 < Rf < 0{,}4,$$

$$0{,}4 < Rf < 0{,}9,$$

et

$$0{,}9 < Rf < 1{,}0$$

De manière particulièrement avantageuse, le procédé comprend une adaptation de la forme du gradient d'élution à chaque valeur d'un facteur $\Delta CV$ de différence de volume en tenant compte du fait qu'un même facteur $\Delta CV$ correspond à des différences de facteur de rétention $\Delta Rf$ différentes dans chacune desdites quatre zones.

De préférence, la sélection et le calcul mis en oeuvre à l'étape (d) prennent en compte de un à l'ensemble des composés d'intérêts répartis sur l'ensemble de la plaque.

De manière avantageuse, l'étape (d) prend en compte la différence entre les forces éluantes des solvants utilisés dans la chromatographie liquide préparative et la variation non linéaire de la force éluante d'un mélange de solvants en fonction de la composition dudit mélange.

Selon une forme d'exécution, le procédé comprend l'acquisition d'une image d'une plaque de chromatographie sur couche mince et la détection automatique, à partir de ladite image, des composés séparés par un appareil portatif de l'utilisateur, l'entrée des données analytiques de l'étape (b) comprenant une importation de données à partir dudit appareil portatif.

Selon un mode de réalisation, le procédé sélectionné à l'étape (a) est la chromatographie en phase liquide à haute performance, la sélection comprenant en outre le choix d'un mode de chromatographie parmi :

- la chromatographie sur phase normale (NPLC),
- la chromatographie sur phase inverse (RPLC),
- la chromatographie d'interaction hydrophile (HILIC),
- la chromatographie d'interaction hydrophobe (HIC).

Les données de chromatographie analytique entrées à l'étape (b) sont alors des données de chromatographie liquide analytique obtenues sur un outil de séparation de référence.

Selon un mode de réalisation, la table des outils de séparation disponibles comprend un outil de séparation identique à l'outil de séparation de référence, et l'étape (d) comprend la sélection dudit outil et le calcul des conditions opératoires de chromatographie liquide préparative pour ledit outil de séparation.

De manière alternative, la table des outils de séparation disponibles n'inclut pas d'outil de séparation identique à l'outil de séparation de référence, et l'étape (c) comprend la sélection d'un outil de séparation présentant une phase stationnaire différente de celle de l'outil de référence par comparaison de similarités entre la phase stationnaire de l'outil de référence avec la phase stationnaire des outils de séparation disponibles, ou la sélection d'un outil de séparation comprenant la même phase stationnaire que l'outil de référence et le calcul des conditions opératoires de chromatographie liquide préparative en mode multi-injection (« multi-run » selon la terminologie anglo-saxonne) en minimisant le nombre d'injections.

Selon un mode de réalisation, le procédé comprend une étape de calcul de séparation par chromatographie sur couche mince ou par chromatographie en phase liquide à haute performance à l'isoéluance pour déterminer d'autres conditions analytiques.

De manière avantageuse, la sélection et le calcul de l'étape (d) prennent en compte la force éluante spécifique à chaque solvant fort.

Selon un mode de réalisation, le procédé comprend la mise en oeuvre d'un test (« screening » selon la terminologie anglo-saxonne) de séparation sur une pluralité d'outils de séparation et la sélection de l'outil de séparation présentant le meilleur potentiel de séparation parmi lesdits outils. Ce test est mis en oeuvre lorsqu'il n'existe pas de données analytiques susceptibles d'être entrées à l'étape (b), que ce soit en chromatographie sur couche mince ou en chromatographie en phase liquide à haute performance.

Selon un mode de réalisation, la table des outils de séparation disponibles comprend un outil de séparation identique à l'outil présentant le meilleur potentiel de séparation, et l'étape (d) comprend la sélection dudit outil et le calcul des conditions opératoires de chromatographie liquide préparative pour ledit outil de séparation.

De manière alternative, la table des outils de séparation disponibles n'inclut pas d'outil de séparation identique à l'outil présentant le meilleur potentiel de séparation, et l'étape (d) comprend la sélection d'un outil de séparation comprenant la même phase stationnaire que l'outil présentant le meilleur potentiel de séparation et le calcul des conditions opératoires de chromatographie liquide préparative en mode multi-injection en minimisant le nombre d'injections.

Selon une forme d'exécution de l'invention, le procédé comprend un enchaînement d'au moins deux séries d'étapes (a) à (d), avec deux procédés et/ou modes de chromatographie liquide analytique différents.

De manière particulièrement avantageuse, ledit enchaînement est effectué de manière automatique lorsqu'une première série d'étapes (a) à (d) n'a pas permis d'identifier une solution de chromatographie liquide préparative.

Un autre objet de l'invention est un système pour la mise en œuvre du procédé qui vient d'être décrit.

Ledit système comprend :

- un ordinateur comprenant un processeur, une interface utilisateur et un écran d'affichage, le processeur étant configuré pour mettre en œuvre les étapes du procédé tel que décrit ci-dessus,
- un système de chromatographie liquide préparative piloté par ledit ordinateur, comprenant un réservoir de phase mobile, une pompe, un injecteur, un outil de séparation, un détecteur, un enregistreur de données et un collecteur de fractions.

De préférence, le procédé de pilotage décrit ci-dessus sera mis en œuvre au moyen d'un dispositif de traitement comprenant des moyens pour la mise en œuvre des étapes du procédé de pilotage, tel qu'un ordinateur de type PC comportant une mémoire et une unité de traitement sur laquelle est exécuté un programme d'ordinateur.

Ce programme d'ordinateur comprend notamment un ou plusieurs algorithmes permettant d'exécuter les étapes du procédé décrit précédemment.

## DESCRIPTION DES FIGURES

D'autres caractéristiques et avantages de l'invention ressortiront de la description détaillée qui va suivre, en référence aux dessins annexés sur lesquels :

- la figure 1 est un logigramme présentant le fonctionnement du système selon l'invention ;
- la figure 2 est un schéma d'une séparation obtenue sur une plaque de chromatographie en couche mince.

## DESCRIPTION DETAILLEE DE MODES DE REALISATION DE L'INVENTION

L'invention permet, à partir d'une analyse chromatographique analytique, notamment sur couche mince ou sur colonne HPLC (chromatographie en phase liquide à haute performance, acronyme du terme anglo-saxon «high pressure liquid chromatography » ou « high performance liquid chromatography »), en phase normale, phase inverse ou autre, de proposer le meilleur compromis de purification possible par chromatographie liquide préparative.

Ladite chromatographie liquide préparative peut être mise en œuvre de la basse pression à la haute pression, et inclut en particulier les appellations flash chromatographie, MPLC (acronyme du terme anglo-saxon « medium pressure liquid chromatography »), et HPLC. La pression de mise en œuvre n'est limitée que par le système de chromatographie utilisé, et notamment la pression que peut supporter l'outil de séparation. Par « basse pression » on entend généralement une pression de l'ordre de quelques bar à plusieurs dizaines de bar ; par « haute pression », on entend généralement une pression de quelques dizaines de bar à plusieurs centaines de bar, voire davantage.

A cet effet, l'invention propose un procédé mis en œuvre par ordinateur qui guide l'utilisateur de la fourniture des données analytiques jusqu'à la définition de l'ensemble des conditions qui permettent de mettre en œuvre la chromatographie liquide préparative. L'ensemble des étapes peut être mis en œuvre de manière automatique, sans que l'utilisateur ne soit sollicité pour entrer des données ou effectuer des choix.

Ce procédé est donc particulièrement intéressant pour un utilisateur novice en chromatographie.

Cependant, même lorsque l'utilisateur a un certain niveau d'expertise en chromatographie, le procédé reste avantageux dans la mesure où il permet de réduire la durée nécessaire à la détermination des conditions opératoires ; par ailleurs, le procédé peut comprendre des étapes mises en œuvre directement par l'utilisateur, qui permettent à celui-ci d'interagir avec les algorithmes utilisés (mode expert).

Le procédé inclut un accès à une table d'outils de séparation disponibles chez l'utilisateur. Cette table peut se présenter sous la forme d'une base de données listant tous les outils en stock chez l'utilisateur, et comprenant des champs correspondant aux caractéristiques principales desdits outils : type d'outil (par exemple : colonne, cartouche), matériau constitutif de l'outil (plastique, inox...), dimensions (diamètre intérieur, largeur, ...), nature de la phase stationnaire, granulométrie de la phase stationnaire, marque ou fournisseur de la phase stationnaire, etc. Dans la suite du texte, on emploiera le terme de « colonne » dans un souci de concision, mais sans limitation aucune quant au type d'outil de séparation employé. De manière particulièrement avantageuse, lesdits outils de préparation permettent de mettre en œuvre des techniques de chromatographie différentes, notamment des techniques pouvant être mises en œuvre à des pressions différentes (de la basse pression à la haute pression), en phase normale et/ou en phase inverse.

Le procédé peut avantageusement être implémenté dans les systèmes de chromatographie commercialisés par la Demanderesse sous la marque puriFlash™, mais pourrait également l'être dans d'autres systèmes. Ces systèmes comprennent d'une manière générale un réservoir de phase mobile, une pompe, un injecteur, un outil de séparation, un détecteur, un enregistreur de données et un collecteur de fractions. De tels systèmes sont bien connus de l'homme du métier et ne seront donc pas décrits en détail dans le présent texte.

Le procédé peut inclure un accès à une table de systèmes (ou appareillages) de chromatographie disponibles chez l'utilisateur. Le procédé prend en compte les besoins exprimés par l'utilisateur selon le stade de développement du produit, par exemple en termes de pureté à atteindre, pour proposer le système de chromatographie le plus adapté. La définition du système tient compte des volumes morts de l'appareillage, de la puissance de pompage nécessaire. Ainsi, le procédé permet de choisir l'outil et le système de chromatographie les plus adaptés en fonction du produit à purifier et du degré de pureté souhaité.

L'unité de commande comprend un processeur configuré pour mettre en œuvre un certain nombre d'algorithmes décrits ci-dessous, ou pour communiquer avec un ordinateur distant mettant en œuvre lesdits algorithmes. Eventuellement, dans le cas d'un échantillon solide, le système peut également comprendre un support d'injection solide (généralement appelé « dry load » selon la terminologie anglo-saxonne) ; ce support est agencé sur le circuit de phase mobile en amont de la colonne.

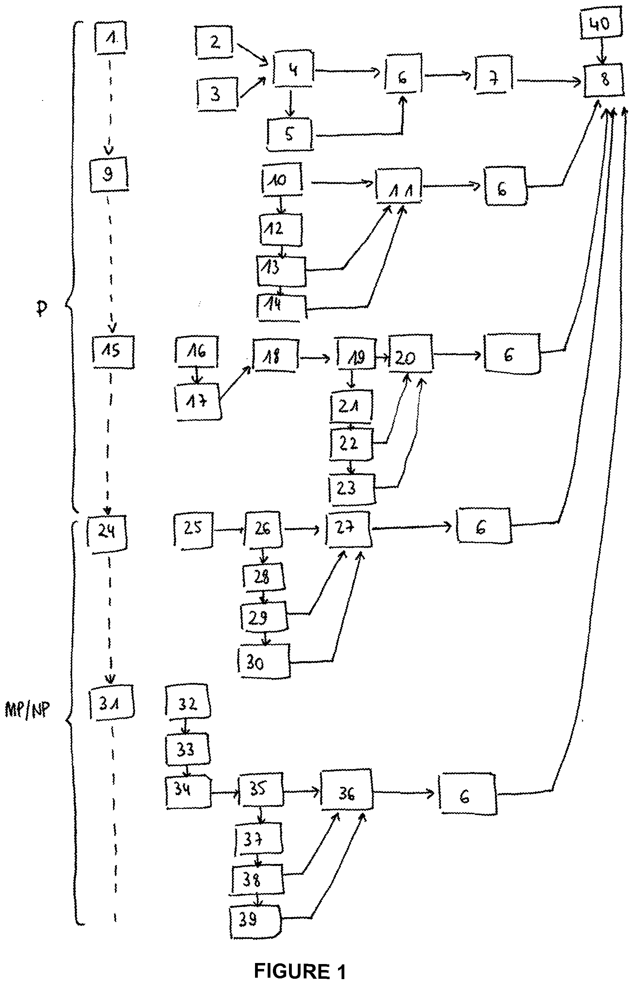

Le logigramme de la figure 1 illustre l'architecture générale du procédé.

Les différentes modalités sont décrites ci-après successivement.

Il est intéressant de noter que toutes les modalités s'enchaînent, de sorte qu'elles peuvent être éventuellement toutes être mises en œuvre, en partant de données analytiques CCM qui sont les données les plus classiquement disponibles chez l'utilisateur, en allant vers d'autres types de données analytiques lorsque les données analytiques CCM ne sont pas disponibles ou ne sont pas satisfaisantes. Ainsi, lorsqu'un type de données analytiques ne permet pas de proposer à l'utilisateur une solution de chromatographie liquide préparative, celui-ci est automatiquement guidé vers un autre type de données analytiques susceptible de permettre d'aboutir à la proposition d'une solution de chromatographie liquide séparative. Par conséquent, même s'il est novice en chromatographie, l'utilisateur est entièrement guidé depuis la fourniture des données analytiques jusqu'à l'obtention d'une solution de chromatographie liquide préparative.

Naturellement, en fonction de la nature de l'échantillon (polaire ou non) et de la nature des données analytiques disponibles, seules certaines de ces étapes pourront être mises en œuvre, l'utilisateur étant libre de lancer la mise en œuvre du procédé à partir de n'importe laquelle desdites modalités. Cependant, le système est configuré pour pouvoir traiter l'ensemble des types de données analytiques détaillées plus bas.

Dans une première étape, l'utilisateur est amené à sélectionner, au moyen d'une interface, le procédé de chromatographie liquide analytique mis en oeuvre pour obtenir les données analytiques à utiliser. Cette sélection est opérée parmi les procédés suivants, qui sont proposés à l'utilisateur par l'interface :

- la chromatographie sur couche mince (CCM),

- la chromatographie en phase liquide à haute performance (HPLC).

Le cas échéant, la sélection inclut également le mode de chromatographie employé pour obtenir les données sur colonne HPLC. Le mode de chromatographie est typiquement choisi parmi :

- la chromatographie sur phase normale (NPLC),
- la chromatographie sur phase inverse (RPLC),
- la chromatographie d'interaction hydrophile (HILIC, acronyme du terme anglo-saxon « hydrophilic interaction chromatography ») : cette technique est particulièrement avantageuse pour la séparation de petites molécules polaires,
- la chromatographie d'interaction hydrophobe (HIC, acronyme du terme anglo-saxon « hydrophobic interaction chromatography ») : cette technique est particulièrement avantageuse pour la séparation des acides aminés hydrophobes, des peptides et des protéines.

Dans une deuxième étape, les données analytiques obtenues par le procédé sélectionné précédemment sont fournies au processeur en tant que données d'entrée, par l'intermédiaire d'une interface. Comme cela sera décrit en détail plus bas, ces données peuvent être saisies manuellement par l'utilisateur dans une table, ou être importées à partir d'un appareil portatif tel qu'un smartphone ou une tablette dans lequel sont stockées les données.

Une première série (P) de situations concerne un échantillon polaire.

Selon une première possibilité (case 1), l'utilisateur dispose de données analytiques sur une plaque CCM, pour l'échantillon considéré.

Le traitement des données analytiques CCM a fait l'objet d'un développement original par les inventeurs.

Au préalable, on rappelle la définition des grandeurs utilisées :

- le facteur de rétention Rf est une grandeur relative qui caractérise l'élution d'un composé sur une plaque de chromatographie couche mince (CCM). C'est le rapport entre la distance de migration d'un soluté sur la distance de migration de la phase mobile. Ainsi, un soluté totalement élué a un facteur de rétention égal à 1. Un soluté qui n'est pas entrainé par la phase mobile a un facteur de rétention égal à 0.
- k est une grandeur thermodynamique caractérisant la rétention d'un soluté dans une colonne, qui est égale à $(tr-t0)/t0$ ou $(Vr-V0)/V0$,

où tr est le temps de rétention du soluté, t0 le temps que met la phase mobile à parcourir la colonne, Vr le volume de phase mobile nécessaire pour faire sortir le soluté de la colonne, V0 le volume de vide de la colonne.

Pour un même système chromatographique, il existe une relation fondamentale reliant les facteurs de rétention Rf et k :

$$k = (1-Rf)/Rf$$

- $\Delta k$ est une grandeur relative indépendante de la géométrie de la colonne, qui est caractéristique d'un soluté donné, élué sur une phase stationnaire donné par une phase mobile donnée à une température donnée.
- en chromatographie liquide préparative, c'est le volume de phase mobile nécessaire pour recueillir le soluté qui est la grandeur réellement utile. Ce volume Vs, parfois appelé CV, s'exprime en unité de volume mort de la colonne pour tenir compte des différentes géométries de colonne :

$$Vs = CV = Vr/V0 = 1 + k$$

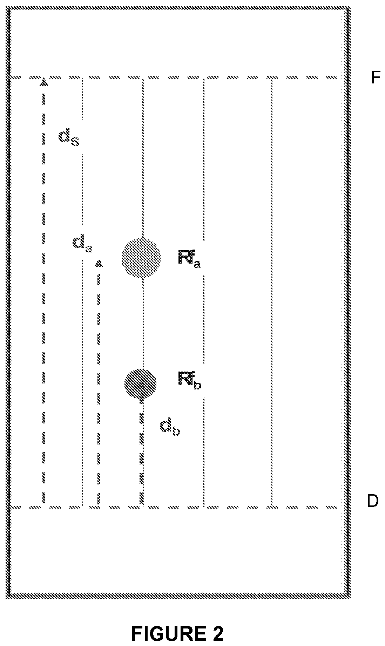

La figure 2 illustre de manière schématique une plaque CCM avec deux taches correspondant chacune à un composé a, b, dont l'un est le composé d'intérêt et l'autre son plus proche voisin. $d_s$ est la distance entre la ligne de dépôt (désignée par la lettre D) de l'échantillon et le front de solvant (désigné par la lettre F). $d_a$ est la distance entre la ligne de dépôt de l'échantillon et le centre de la tache correspondant au composé a, et $d_b$ est la distance entre la ligne de dépôt de l'échantillon et le centre de la tache correspondant au composé b.

$$Rf_a = d_a/d_s$$

$$Rf_b = d_b/d_s$$

$$Vs_a = CV_a = 1/Rf_a = 1+k_a$$

$$Vs_b = CV_b = 1/Rf_b = 1+k_b$$

d'où :

$$\Delta CV = CV_b - CV_a$$

$$k = K_{tr} \text{ x } (1/Rf - 1) \text{ avec } K_{tr} = \text{constante} = 1$$

$$\Delta k = K_{tr} \text{ x } [(1/Rf_b - 1) - (1/Rf_a - 1)]$$

d'où :

$$\Delta CV = \Delta k$$

L'invention peut être mise en œuvre avec une plaque CCM dont le facteur de rétention Rf du composé d'intérêt est compris entre 0,01 et 1,0 avec une différence $\Delta k$ de rétention entre le composé d'intérêt et son plus proche voisin (ou de ses deux plus proches voisins) supérieure ou égale à 0,20 et pour $\Delta Rf \geq 0,02$.

Elle peut prendre en compte de un à l'ensemble des composés présents sur la plaque CCM, lesdits composés pouvant être répartis sur l'ensemble de la plaque CCM. Ainsi, une transposition de la chromatographie sur couche mince vers la chromatographie liquide préparative peut toujours être mise en œuvre, ce qui permet de proposer à l'utilisateur une solution de purification sans lui imposer de réaliser des manipulations supplémentaires.

L'originalité du traitement est qu'il tient compte de l'amplitude $\Delta\varepsilon°$ (c'est-à-dire la différence entre les forces éluantes de deux solvants pris séparément) et de la variation non linéaire de la force éluante d'un mélange de solvants purs en fonction de la composition du mélange, $\varepsilon°$ étant la force éluante d'un solvant.

Les calculs définissent cinq amplitudes de travail représentatives de l'ensemble des amplitudes couvrant les forces éluantes des solvants renseignés dans le logiciel.

De plus, les inventeurs ont défini, en fonction de la position absolue et relative des composés sur la plaque de CCM, quatre zones de rétention du composé d'intérêt.

Par exemple, pour le couple cyclohexane / acétate d'éthyle, pour lequel $\Delta\varepsilon° = 0,38$, les zones suivantes ont été définies :

$$(0,01 < Rf \leq 0,07) - (0,08 \leq Rf \leq 0,40) - (0,40 < Rf \leq 0,9) - (0,9 < Rf < 1,0)$$

et, pour chacune de ces zones, les six conditions de solvants forts suivantes ont été définies pour mimer par morceaux la courbure de la force éluante (le solvant fort étant le solvant le plus éluant de la phase mobile) :

(0 < % S fort $\leq$ 4) - (5 $\leq$ % S fort $\leq$ 8) - (9 $\leq$ % S fort $\leq$ 13) - (14 $\leq$ % S fort $\leq$ 20) - (21 $\leq$ % S fort $\leq$ 53) - (54 $\leq$ % S fort < 100),

où % S fort est le pourcentage en volume de solvant fort dans la phase mobile.

Pour chacune de ces zones de rétention, le calcul du $\Delta k$ de la paire ou du triplet critique (c'est-à-dire la paire ou le triplet de pics qui sont le moins bien résolus) permettant, connaissant le volume de vide V0 des colonnes, de proposer un certain nombre de conditions de gradient et de conditions isocratiques et en fonction de la taille des particules de la colonne (case 4).

Cela conduit à 1215 cas en totalité (pour 115 de ces cas, la séparation n'est pas possible).

La forme du gradient d'élution est ainsi adaptée à chaque valeur de $\Delta CV$ en tenant compte du fait qu'un même facteur $\Delta CV$ correspond à des différences de facteur de rétention $\Delta Rf$ différentes dans chacune des quatre zones de rétention susmentionnées.

A partir de ces éléments, un algorithme informatique a été construit pour chaîner l'ensemble des conditions relatives aux quatre zones et conduire à une solution de chromatographie liquide préparative unique. Cet algorithme intègre un calcul de facteur multiplicateur (« scale-up ») direct basé sur le dimensionnement de la colonne à utiliser en fonction de la quantité d'échantillon à purifier. Ledit facteur est le facteur multiplicateur entre la quantité de matière en chromatographie analytique et celle en chromatographie liquide préparative.

L'utilisateur indique, comme donnée d'entrée supplémentaire, la masse d'échantillon à purifier.

L'utilisateur peut également sélectionner le mode d'introduction du produit à purifier, parmi une introduction en solution ou un dépôt solide (« dry load »).

Un algorithme calcule la meilleure pertinence entre la géométrie et la nature de la colonne de chromatographie, basée sur les équations de charge pour améliorer le ratio coût/productivité de la chromatographie liquide préparative.

Les conditions initiales et la forme des gradients sont calculées à partir des Rf et des $\Delta$Rf des solutés en CCM. Les différents profils de gradient proposés s'appuient sur la forme des courbes de forces éluantes des mélanges binaires de solvants en HPLC à polarité normale de phases (mode phase normale).

Une classification de six colonnes est ordonnée en fonction de la difficulté de séparation $\Delta$k et $\Delta$Rf (case 6). Cette classification est effectuée à partir de la table des colonnes, de sorte que la proposition contienne au moins trois colonnes en stock chez l'utilisateur. Cette classification prend en compte le type de colonne, le type de phase stationnaire et la masse moléculaire des composés d'intérêts.

L'affichage des colonnes proposées parmi l'ensemble des colonnes disponibles est donc modulé en fonction de l'application visée et des données d'entrée.

L'utilisateur est avantageusement invité à valider la colonne choisie (case 7).

Il existe différents moyens pour entrer les données analytiques.

Selon une forme d'exécution, l'utilisateur saisit manuellement les données analytiques dans une table à remplir (case 2). Les données saisies incluent typiquement :

- pour la CCM : les Rf, les composés d'intérêt, les solvants et la masse à purifier ;
- pour l'HPLC : les temps de rétention des composés, la somme des volumes morts en amont de la colonne (connue sous le nom de « dwell volume, » en anglais) le diamètre interne de la colonne et sa longueur, la granulométrie de la phase stationnaire, le volume mort de la colonne analytique, le débit et le volume injecté.

Selon une forme d'exécution particulièrement avantageuse, l'utilisateur dispose d'un appareil portatif intelligent, tel qu'un smartphone ou une tablette, équipé d'une application dédiée à l'acquisition des données analytiques CCM et au transfert desdites données au processeur destiné à l'élaboration d'une solution de chromatographie liquide préparative (case 3). Une telle application a pour avantages de rendre plus rapide et simple l'étape de chromatographie sur couche mince et son traitement.

Ladite application présente les fonctionnalités suivantes :

(1) la détection automatique des composés sur la plaque CCM :

A partir d'une photographie d'une plaque CCM prise en direct par l'utilisateur ou téléchargée à partir de la bibliothèque de photographies située dans le smartphone de l'utilisateur, l'algorithme distingue (si le contraste le permet) le contour des formes et place un point en leur centre indiquant la présence d'un composé. Si le composé n'est pas reconnu automatiquement par l'algorithme, l'utilisateur peut manuellement identifier les composés ou apporter des corrections. Il doit également placer deux lignes représentant la ligne de dépôt de l'échantillon et de front de solvant.

(2) l'identification des composés d'intérêts et le calcul des facteurs de rétention (Rf) et des $\Delta$CV (=$\Delta$k)

Une fois tous les composés identifiés, l'utilisateur indique ceux d'intérêt en cliquant dessus. Les facteurs de rétention Rf s'affichent pour chaque composé d'intérêt. S'il le souhaite, en appuyant sur un bouton dédié, l'utilisateur peut voir si ses composés sont dans la zone de confort de travail. La zone est typiquement comprise de 0,1 à 0,4.

L'utilisateur peut également, en cliquant sur un bouton dédié à cet effet, faire apparaître les $\Delta$CV (=$\Delta$k). Ceux-ci sont calculés à partir du placement du composé supérieur et inferieur.

L'application communique le $\Delta$CV (=$\Delta$k) le plus faible sous la forme « Min $\Delta$CV ». A partir de cette donnée, un message d'alerte s'affiche indiquant à l'utilisateur le niveau de difficulté de la séparation. Par exemple, le mode manuel peut inclure trois niveaux de difficulté :

- facile, correspondant à un « min $\Delta$CV » supérieur à 4,
- standard, correspondant à un « min $\Delta$CV » compris entre 1,5 et 4,
- difficile, correspondant à un « min $\Delta$CV » inférieur à 1,5.

(3) le renseignement des solvants et la quantité d'échantillon à purifier :

L'utilisateur est invité à renseigner la quantité d'échantillon à purifier ainsi que de sélectionner les solvants (deux au maximum) qui ont été utilisés et leur proportion respective en %. Pour chacun des solvants, l'utilisateur peut indiquer s'il y a un additif et ajouter un commentaire à propos de ceux-ci ou de façon plus générale sur l'écran suivant s'il le souhaite.

Un écran récapitulatif de ses données est alors affiché.

(4) la transmission directe et sécurisée de ces informations au système de chromatographie :

Les données mentionnées plus haut peuvent être sauvegardées dans la base de données personnelle de l'utilisateur, envoyées à l'utilisateur par courriel, ou envoyées par Bluetooth ou Wifi ses informations au système de chromatographie liquide préparative.

(5) l'appairage de l'application au système de chromatographie liquide préparative :

L'application comprend un module de paramétrage permettant d'appairer le système de chromatographie à l'application via wifi, par le biais d'un protocole de transfert de fichier (FTP) où sera déposé et lu le dossier de données analytiques. Ce module de paramétrage peut également permettre à l'utilisateur de renseigner son adresse de courriel pour recevoir les fichiers sur celle-ci.

(6) l'archivage et l'envoi répété de mêmes données :

L'application comprend avantageusement un module d'archivage dans lequel l'utilisateur peut, s'il le souhaite, archiver ses données. Dans ce cas, les données ne seront consultables que de son smartphone. En cas de besoin, l'utilisateur peut envoyer à nouveau et autant de fois qu'il le souhaite les données analytiques d'une plaque CCM au système de chromatographie.

De manière avantageuse, l'envoi se fait via un fichier .json comprenant une photographie de la plaque, le nom qui lui a été attribué, les Rf des composés d'intérêts, les commentaires sur la plaque en général, l'indication de la quantité de produit à purifier, le nom des solvants, leur proportion en %, la mention d'un additif et les éventuels commentaires sur les solvants s'il y a lieu. Toutes ces données sont lues par l'algorithme de traitement décrit ci-dessous afin d'élaborer des propositions de solutions de chromatographie liquide préparative.

Il peut cependant se produire que la séparation CCM ne soit pas satisfaisante, par exemple en raison du positionnement du ou des pics d'intérêt, du fait que la nature ou la quantité de solvant pour réaliser la purification est supérieure au stock de l'utilisateur, du fait qu'aucune colonne adaptée n'est en stock ...

Dans ce cas le processeur lance un algorithme qui, en changeant les conditions analytiques, notamment le solvant fort ou le couple de solvants utilisés, permet d'obtenir, à l'isoéluance, des séparations différentes de celles initiales (case 5). Cela permet de déterminer les conditions expérimentales ayant le meilleur potentiel dans la zone de rétention optimum pour obtenir une purification efficace. L'algorithme est basé à cet effet sur le diagramme universel décrit dans l'ouvrage Principles of adsorption chromatography, R.L. Snyder, éd. M. Dekker (1968).

L'algorithme calcule les limites de pourcentages de solvant fort spécifiques pour chacune des cinq amplitudes de travail mentionnées plus haut.

Puis, des conditions de chromatographie liquide préparative sont proposées (case 6 décrite précédemment).

En l'absence de données analytiques de CCM, mais si un chromatogramme analytique est disponible (case 9), un autre module est utilisé, comme décrit ci-après.

Dans le cas d'un chromatogramme obtenu par HPLC, la résolution entre deux pics est définie par la relation :

$$Rs = 2 \times (t_{R2} - t_{R1})/(\omega_2 - \omega_1),$$

où $t_R$ est le temps de rétention d'un pic, et $\omega$ est la largeur d'un pic à sa base.

Il en découle que la séparation entre deux pics est d'autant meilleur que Rs est grand.

Dans un premier cas (case 10), la phase stationnaire analytique est identique à celle d'au moins une colonne de la table des colonnes. A partir de la colonne analytique renseignée, un algorithme identifie une ou plusieurs colonnes dans la table des colonnes dont les champs relatifs au matériau de la phase stationnaire, à sa marque et à son greffage sont en adéquation. La quantité d'échantillon à purifier est renseignée.

Un autre algorithme (case 11) sélectionne la ou les colonnes compatibles avec le système en termes de pression, en tenant compte de la nature de la phase stationnaire, de la taille des particules, de la nature des solvants et du matériau de la colonne.

Un algorithme calcule le rapport de scale-up à partir du diamètre interne et de la longueur des colonnes et du pourcentage de volume poreux des particules de phase stationnaire utilisées.

La masse d'échantillon brut à purifier est divisée par ledit rapport de scale-up pour calculer le nombre d'injections à effectuer.

Enfin, un algorithme effectue la transposition de la méthode gradient d'une colonne analytique vers une méthode gradient d'une colonne de chromatographie liquide préparative. Cette transposition est basée sur le rapport direct des dimensions de colonnes, le re-calcul de la pente du gradient, de ses marches et de ses temps et du pourcentage de volume poreux des particules utilisées. Il tient également compte du volume de vide V0 des colonnes et du volume de délai de l'appareillage. Il prédit ainsi l'évolution de la pression et de la consommation de solvant. Les temps de rétention des composés en analytique entrés dans une table de calcul des temps de rétention sont de même transposés en temps prédictifs de rétention sur la colonne de chromatographie liquide préparative.

Dans le cas où l'utilisateur ne possède pas de colonne ayant la même phase stationnaire que celle de l'évaluation analytique (case 12), un algorithme identifie dans la table des colonnes si le champ relatif à la nature de la phase stationnaire correspond à (a) une silice vierge, (b) une silice greffée autre que C18 ou (c) une silice greffée C18.

Dans les cas (a) et (b) (silice ou silice greffée autre que C18), l'algorithme identifie si les champs relatifs à la phase stationnaire et au type de greffage dans la table des colonnes sont corrélables ; dans l'affirmative, l'algorithme propose un transfert direct.

Dans le cas (c) (silice greffée C18, qui peut présenter de grandes différences de sélectivité suivant le greffage effectué), une table, nommée « table Atom », compilant les données expérimentales de plusieurs centaines de colonnes à base de silice greffée C18, de différentes marques et fabricants, a été construite au préalable. L'algorithme réalise une normalisation des valeurs expérimentales en fonction des extrêmes Pour chaque colonne analytique et pour chacun des critères de qualification une distance euclidienne relative à l'ensemble des autres colonnes est calculée. Après normalisation chaque distance de chaque critère est additionnée pour devenir la valeur de référence de cette colonne vis-à-vis de toutes les autres. Un des critères a consisté à définir un paramètre unifié relatif à l'hydrophobie.

L'algorithme recherche dans ladite table Atom les champs phase stationnaire, marque et type de greffage identiques à ceux de la colonne analytique renseignée (case 13).

S'il la reconnaît, l'algorithme calcule les proximités (distance euclidienne) des sélectivités de l'ensemble des phases stationnaires qui sont dans la table Atom. Il classifie les réponses par ordre croissant et ne retient que les candidats dont les valeurs de proximité sont inférieures à 0,17.

L'algorithme compare ses résultats à la table Atom et il retient uniquement six candidats suivant des critères basés sur le nombre d'injections et leur présence dans la table des colonnes, qui traduit le fait qu'elles sont en stock physique chez l'utilisateur.

Les étapes suivantes sont celles décrites pour la case 11.

Dans le cas où l'utilisateur ne possède aucune colonne adéquate (case 14), il est notifié du fait qu'il doit procéder à l'achat d'une colonne adaptée. En fonction de la colonne achetée, les étapes suivantes sont celles décrites pour la case 11.

Si aucune solution en phase normale directe n'est trouvée (case 15), un screening en phase normale est mis en oeuvre (case 16). Un tel screening consiste à étudier la séparation sur différentes sélectivités en phase normale en colonne analytique à partir d'un système de HPLC ou de flash chromatographie.

A l'issue de ce screening, un algorithme sélectionne la colonne présentant le meilleur potentiel de purification (case 17). Un algorithme peut éventuellement proposer des conditions d'élution permettant d'obtenir des séparations différentes.

L'algorithme fait alors appel à un chromatogramme analytique de la séparation avec la colonne sélectionnée (case 18).

Dans un premier cas (case 19), la phase stationnaire analytique est identique à celle d'au moins une colonne de la table des colonnes. A partir de la colonne analytique renseignée, un algorithme identifie une ou plusieurs colonnes dans la table des colonnes dont les champs relatifs au matériau de la phase stationnaire, à sa marque et à son greffage sont en adéquation. La quantité d'échantillon à purifier est renseignée.

Un autre algorithme (case 20) sélectionne la ou les colonnes compatibles avec le système en termes de pression, en tenant compte de la nature de la phase stationnaire, de la taille des particules, de la nature des solvants et du matériau de la colonne.

Un algorithme calcule le rapport de scale-up à partir du diamètre interne et de la longueur des colonnes et du pourcentage de volume poreux des particules de phase stationnaire utilisées.

La masse d'échantillon brut à purifier est divisée par ledit rapport de scale-up pour calculer le nombre d'injections à effectuer.

Enfin, un algorithme effectue la transposition de la méthode gradient d'une colonne analytique vers une méthode gradient d'une colonne de chromatographie liquide préparative. Cette transposition est basée sur le rapport direct des dimensions de colonnes, le recalcul de la pente du gradient, de ses marches et de ses temps et du pourcentage de volume poreux des particules utilisées. Il tient également compte du volume de vide V0 des colonnes. Il prédit ainsi l'évolution de la pression et de la consommation de solvant. Les temps de rétention des composés en analytique entrés dans une table de calcul des temps de rétention sont de même transposés en temps prédictifs de rétention sur la colonne de chromatographie liquide préparative.

Dans le cas où l'utilisateur ne possède pas de colonne ayant la même phase stationnaire que celle de l'évaluation analytique (case 21), un algorithme identifie dans la table des colonnes si le champ relatif à la nature de la phase stationnaire correspond à (a) une silice vierge, (b) une silice greffée autre que C18 ou (c) une silice greffée C18 (case 22).

Dans les cas (a) et (b) (silice ou silice greffée autre que C18), l'algorithme identifie si les champs relatifs à la phase stationnaire et au type de greffage dans la table des colonnes sont corrélables ; dans l'affirmative, l'algorithme propose un transfert direct (case 20).

Dans le cas (c) (silice greffée C18, qui peut présenter de grandes différences de fonctionnalités suivant le greffage effectué), une table, nommée « table Atom », compilant les données expérimentales de plusieurs centaines de colonnes à base de silice greffée C18, de différentes marques et fabricants, a été construite au préalable. L'algorithme réalise une normalisation des valeurs expérimentales en fonction des extrêmes. Pour chaque colonne analytique et pour chacun des critères de qualification une distance euclidienne relative à l'ensemble des autres colonnes est calculée. Après normalisation chaque distance de chaque critère est additionnée pour devenir la valeur de référence de cette colonne vis-à-vis de toutes les autres. Un des critères a consisté à définir un paramètre unifié relatif à l'hydrophobie.

L'algorithme recherche dans ladite table Atom les champs phase stationnaire, marque et type de greffage identiques à ceux de la colonne analytique renseignée (case 13).

S'il la reconnaît, l'algorithme calcule les proximités (distance euclidienne) des sélectivités de l'ensemble des phases stationnaires qui sont dans la table Atom. Il classifie les réponses par ordre croissant et ne retient que les candidats dont les valeurs de proximité sont inférieures à 0,17.

L'algorithme compare ses résultats à la table Atom et il retient uniquement six candidats suivant des critères basés sur le nombre d'injections et leur présence dans la table des colonnes, dont au moins trois colonnes sont en stock physique chez l'utilisateur.

Les étapes suivantes sont celles décrites pour la case 20.

Dans le cas où l'utilisateur ne possède aucune colonne adéquate (case 23), il est notifié du fait qu'il doit procéder à l'achat d'une colonne adaptée. En fonction de la colonne achetée, les étapes suivantes sont celles décrites pour la case 20.

Si aucune solution n'est trouvée suite au screening en phase normale, mais qu'il existe une solution en phase inverse (case 24), on entre dans une seconde série de situations qui concerne un échantillon non polaire ou moyennement polaire (NP/MP).

Selon une première possibilité, un chromatogramme analytique de la séparation est disponible (case 25).

La mise en œuvre du procédé selon les cases 26-30 est similaire à celle décrite plus haut en référence aux cases 10-14 et n'est donc pas décrite à nouveau.

Dans le cas où aucune solution en phase inverse n'est disponible (case 31), le système propose la mise en œuvre d'une étude de la séparation sur différentes sélectivités en phase inverse, à partir d'un système de HPLC ou de flash chromatographie (case 32).

Un algorithme permet en deux étapes et à partir d'un jeu de colonnes dont les paramètres thermodynamiques p et q sont connus de déterminer la colonne ayant le potentiel de séparation le plus intéressant (case 33). La première étape détermine les conditions de phase mobile pour lesquelles le facteur de rétention du dernier des composés élués du mélange à purifier est de l'ordre de 10 et permet de recalculer les conditions d'isoéluance pour que chacune des autres colonnes atteigne ce même objectif. La deuxième étape est celle de l'injection de l'échantillon sur chacune des colonnes à l'isoéluance, puis par comparaison des profils chromatographiques, la colonne la plus pertinente est choisie.

Selon une première possibilité, un chromatogramme analytique de la séparation est disponible (case 34).

La mise en œuvre du procédé selon les cases 35-39 est similaire à celle décrite plus haut en référence aux cases 10-14 et 26-30 et n'est donc pas décrite à nouveau.

Dans tous les cas, une fois que la colonne choisie a été mise en place dans le système de chromatographie, le processeur lance la mise en œuvre la chromatographie selon le mode opératoire calculé (case 8).

De manière particulièrement avantageuse, le procédé de chromatographie liquide préparative peut être accéléré au moyen de l'algorithme décrit ci-après.

Cette possibilité d'accélération permet à l'utilisateur de satisfaire, d'une part le besoin de terminer plus rapidement une purification pour pouvoir s'occuper d'une autre tâche devenue prioritaire et/ou d'autre part de réduire le temps d'analyse en estimant que la résolution de la paire critique ne sera pas impactée de manière significative par l'augmentation du débit.

A cet effet, un algorithme évalue le débit maximum admissible pour la purification en cours et le facteur de pression (pris en compte avec notamment la pression limite du système de chromatographie concerné, celle de la colonne et éventuellement celle du Dry-load) en fonction de la difficulté de la séparation $\Delta$k pour les données analytiques CCM et Rs pour les données analytiques HPLC (case 40). Un algorithme ajuste automatiquement à la nouvelle condition la méthode gradient en temps réel. L'utilisateur peut choisir d'enclencher l'accélération à n'importe quel moment de la purification. Cette opération est réversible et s'effectue en toute sécurité, sans aucune perte de produit.

**EP 3 775 873 B1**

## Revendications

1. Procédé de pilotage d'une chromatographie liquide préparative, comprenant les étapes suivantes, au moins une partie desdites étapes étant mises en œuvre par un ordinateur comprenant un processeur et un écran d'affichage couplé audit processeur :

   (a) la sélection, par l'intermédiaire d'une interface, d'un procédé de chromatographie liquide analytique parmi la chromatographie sur couche mince (CCM) et la chromatographie en phase liquide à haute performance (HPLC),
   (b) l'entrée de données de chromatographie liquide analytique obtenues par le procédé sélectionné à l'étape (a) pour un produit à purifier,
   (c) l'accès à une table d'outils de séparation disponibles chez l'utilisateur pour mettre en œuvre ladite chromatographie liquide préparative, lesdits outils étant des colonnes, des cartouches ou d'autres dispositifs de chromatographie comprenant une phase stationnaire,
   (d) à partir desdites données de chromatographie liquide analytique et de la table des outils de séparation disponibles, la sélection d'un outil de séparation optimal dans ladite table et le calcul de conditions opératoires de chromatographie liquide préparative sur ledit outil de séparation sélectionné.

2. Procédé selon la revendication 1, comprenant en outre une étape d'entrée de la quantité de produit à purifier.

3. Procédé selon l'une des revendications 1 ou 2, comprenant en outre une étape de sélection du mode d'introduction du produit à purifier sur l'outil de séparation sélectionné, ledit mode d'introduction étant choisi parmi une introduction en solution ou un dépôt solide.

4. Procédé selon l'une des revendications 1 à 3, comprenant une étape de validation du calcul par un utilisateur, et après ladite validation, une étape de lancement de la chromatographie liquide préparative sur l'outil de séparation sélectionné.

5. Procédé selon l'une des revendications 1 à 4, comprenant l'enclenchement par un utilisateur d'une accélération de la chromatographie liquide préparative, l'étape (d) comprenant le calcul des conditions opératoires optimisées en tenant compte du débit maximum et de la pression limite du système de chromatographie liquide préparative dans lequel l'outil de séparation sélectionné est mis en œuvre.

6. Procédé selon l'une des revendications 1 à 5, dans lequel le procédé sélectionné à l'étape (a) est la chromatographie sur couche mince (CCM) et l'étape (b) comprend l'entrée de données analytiques obtenues sur une plaque de chromatographie sur couche mince.

7. Procédé selon la revendication 6, dans lequel la sélection et le calcul mis en œuvre à l'étape (d) prennent en compte quatre cas différents selon les valeurs de facteur de rétention (Rf) de la plaque :

$$0{,}01 < Rf < 0{,}07,$$

$$0{,}08 < Rf < 0{,}4,$$

$$0{,}4 < Rf < 0{,}9,$$

$$0{,}9 < Rf < 1{,}0$$

8. Procédé selon la revendication 7, comprenant une adaptation de la forme du gradient d'élution à chaque valeur d'un facteur ($\Delta$CV) de différence de volume en tenant compte du fait qu'un même facteur ($\Delta$CV) correspond à des différences de facteur de rétention ($\Delta$Rf) différentes dans chacune desdites quatre zones.

9. Procédé selon l'une des revendications 6 à 8, dans lequel la sélection et le calcul mis en œuvre à l'étape (d) prennent en compte de un à l'ensemble des composés d'intérêts répartis sur l'ensemble de la plaque.

10. Procédé selon l'une des revendications 6 à 9, dans lequel l'étape (d) prend en compte la différence ($\Delta\varepsilon°$) entre les forces éluantes des solvants utilisés dans la chromatographie liquide préparative et la variation non linéaire de la force éluante d'un mélange de solvants en fonction de la composition dudit mélange.

**11.** Procédé selon l'une des revendications 6 à 10, comprenant l'acquisition d'une image d'une plaque de chromatographie sur couche mince et la détection automatique, à partir de ladite image, des composés séparés par un appareil portatif de l'utilisateur, l'entrée des données analytiques de l'étape (b) comprenant une importation de données à partir dudit appareil portatif.

**12.** Procédé selon l'une des revendications 1 à 5, dans lequel le procédé sélectionné à l'étape (a) est la chromatographie en phase liquide à haute performance, la sélection comprenant en outre le choix d'un mode de chromatographie parmi :

- la chromatographie sur phase normale (NPLC),
- la chromatographie sur phase inverse (RPLC),
- la chromatographie d'interaction hydrophile (HILIC),
- la chromatographie d'interaction hydrophobe (HIC).

**13.** Procédé selon la revendication 12, dans lequel les données de chromatographie analytique entrées à l'étape (b) sont des données de chromatographie liquide analytique obtenues sur un outil de séparation de référence.

**14.** Procédé selon la revendication 13, dans lequel la table des outils de séparation disponibles comprend un outil de séparation identique à l'outil de séparation de référence, et l'étape (c) comprend la sélection dudit outil et le calcul des conditions opératoires de chromatographie liquide préparative pour ledit outil de séparation.

**15.** Procédé selon la revendication 13, dans lequel la table des outils de séparation disponibles n'inclut pas d'outil de séparation identique à l'outil de séparation de référence, et l'étape (d) comprend la sélection d'un outil de séparation présentant une phase stationnaire différente de celle de l'outil de référence par comparaison de similarités entre la phase stationnaire de l'outil de référence avec la phase stationnaire des outils de séparation disponibles, ou la sélection d'un outil de séparation comprenant la même phase stationnaire que l'outil de référence et le calcul des conditions opératoires de chromatographie liquide préparative en mode multi-injection en minimisant le nombre d'injections.

**16.** Procédé selon l'une des revendications 6 à 15, comprenant une étape de calcul de séparation par chromatographie sur couche mince ou par chromatographie en phase liquide à haute performance à l'isoéluance pour déterminer d'autres conditions analytiques.

**17.** Procédé selon l'une des revendications 6 à 16, dans lequel la sélection et le calcul de l'étape (d) prennent en compte la force éluante spécifique à chaque solvant fort.

**18.** Procédé selon l'une des revendications 1 à 4, comprenant la mise en œuvre d'un test de séparation sur une pluralité d'outils de séparation et la sélection de l'outil de séparation présentant le meilleur potentiel de séparation parmi lesdits outils.

**19.** Procédé selon la revendication 18, dans lequel la table des outils de séparation disponibles comprend un outil de séparation identique à l'outil présentant le meilleur potentiel de séparation, et l'étape (d) comprend la sélection dudit outil et le calcul des conditions opératoires de chromatographie liquide préparative pour ledit outil de séparation.

**20.** Procédé selon la revendication 18, dans lequel la table des outils de séparation disponibles n'inclut pas d'outil de séparation identique à l'outil présentant le meilleur potentiel de séparation, et l'étape (d) comprend la sélection d'un outil de séparation comprenant la même phase stationnaire que l'outil présentant le meilleur potentiel de séparation et le calcul des conditions opératoires de chromatographie liquide préparative en mode multi-injection en minimisant le nombre d'injections.

**21.** Procédé selon l'une des revendications 1 à 20, comprenant un enchaînement d'au moins deux séries d'étapes (a) à (d), avec deux procédés et/ou modes de chromatographie liquide analytique différents.

**22.** Procédé selon la revendication 21, dans lequel ledit enchaînement est effectué de manière automatique lorsqu'une première série d'étapes (a) à (d) n'a pas permis d'identifier une solution de chromatographie liquide préparative.

**23.** Système de chromatographie liquide préparative, comprenant :

- un ordinateur comprenant un processeur, une interface utilisateur et un écran d'affichage, le processeur étant configuré pour mettre en œuvre les étapes du procédé selon l'une des revendications 1 à 22,
- un système de chromatographie liquide préparative piloté par ledit ordinateur, comprenant un réservoir de phase mobile, une pompe, un injecteur, un outil de séparation, un détecteur, un enregistreur de données et un collecteur de fractions.

**24.** Produit programme d'ordinateur comprenant des instructions de code programme enregistré sur un support utilisable dans un ordinateur, **caractérisé en ce qu'**il comprend des instructions pour la mise en œuvre du procédé selon l'une des revendications 1 à 22 sur un système de chromatographie préparative selon la revendication 23.

**Patentansprüche**

**1.** Verfahren zur Steuerung der präparativen Flüssigchromatographie, das die folgenden Schritte umfasst, wobei mindestens ein Teil dieser Schritte von einem Computer ausgeführt wird, der einen Prozessor und einen mit dem Prozessor verbundenen Bildschirm umfasst:

(a) Auswählen eines analytischen Flüssigchromatographieverfahrens aus der Dünnschichtchromatographie (TLC) und der Hochleistungsflüssigkeitschromatographie (HPLC) mittels einer Benutzeroberfläche,
(b) Eingeben von analytischen Flüssigchromatographiedaten, die durch das in Schritt (a) ausgewählte Verfahren für ein zu reinigendes Produkt erhalten wurden,
(c) Zugreifen auf eine Tabelle von Trennwerkzeugen, die dem Benutzer zur Durchführung der präparativen Flüssigchromatographie zur Verfügung stehen, wobei die Trennwerkzeuge Säulen, Kartuschen oder andere Chromatographievorrichtungen, die eine stationäre Phase enthalten, sind,
(d) Auswählen eines optimalen Trennwerkzeugs aus der Tabelle der verfügbaren Trennwerkzeuge anhand der analytischen Flüssigchromatographiedaten und der Tabelle der verfügbaren Trennwerkzeuge und Berechnen von Betriebsbedingungen für die präparative Flüssigchromatographie für das ausgewählte Trennwerkzeug.

**2.** Verfahren nach Anspruch 1, das ferner einen Schritt des Eingebens der Menge des zu reinigenden Produkts umfasst.

**3.** Verfahren nach einem der Ansprüche 1 oder 2, das ferner einen Schritt des Auswählens der Art der Einführung des zu reinigenden Produkts in das ausgewählte Trennwerkzeug umfasst, wobei die Art der Einführung aus der Einführung in Lösung oder der festen Abscheidung ausgewählt wird.

**4.** Verfahren nach einem der Ansprüche 1 bis 3, umfassend einen Schritt der Validierung der Berechnung durch einen Benutzer und, nach der Validierung, einen Schritt des Startens der präparativen Flüssigchromatographie auf dem ausgewählten Trennwerkzeug.

**5.** Verfahren nach einem der Ansprüche 1 bis 4, das das Auslösen einer Beschleunigung der präparativen Flüssigchromatographie durch einen Benutzer umfasst, wobei Schritt (d) die Berechnung optimierter Betriebsbedingungen unter Berücksichtigung der maximalen Durchflussrate und des Grenzdrucks des präparativen Flüssigchromatographiesystems umfasst, in dem das ausgewählte Trennwerkzeug eingesetzt wird.

**6.** Verfahren nach einem der Ansprüche 1 bis 5, wobei das in Schritt (a) ausgewählte Verfahren Dünnschichtchromatographie (TLC) ist und Schritt (b) die Eingabe von analytischen Daten umfasst, die auf einer Dünnschichtchromatographieplatte erhalten wurden.

**7.** Verfahren nach Anspruch 6, wobei die in Schritt (d) durchgeführte Auswahl und Berechnung vier verschiedene Fälle gemäß den Retentionsfaktorwerten (Rf) der Platte berücksichtigen:

$$0,01 < Rf < 0,07,$$

$$0,08 < Rf < 0,4,$$

$$0,4 < Rf < 0,9,$$

$$0,9 < Rf < 1,0$$

8. Verfahren nach Anspruch 7, umfassend eine Anpassung der Form des Elutionsgradienten an jeden Wert durch einen Volumendifferenzfaktor (DCV), wobei berücksichtigt wird, dass ein gleicher Faktor (DCV) Unterschieden im Retentionsfaktor (DRf) entspricht, die in jeder der vier Zonen unterschiedlich sind.

9. Verfahren nach einem der Ansprüche 6 bis 8, wobei die Auswahl und die Berechnung, die in Schritt (d) durchgeführt werden, eine bis alle der interessierenden Verbindungen berücksichtigen, die über die gesamte Platte verteilt sind.

10. Verfahren nach einem der Ansprüche 6 bis 9, wobei Schritt (d) die Differenz ($\Delta\varepsilon°$) zwischen den Elutionskräften der in der präparativen Flüssigchromatographie verwendeten Lösungsmittel und der nichtlinearen Variation der Elutionskraft einer Lösungsmittelmischung als Funktion der Zusammensetzung der Mischung berücksichtigt.

11. Verfahren nach einem der Ansprüche 6 bis 10, umfassend die Aufnahme eines Bildes einer Dünnschichtchromatographieplatte und die automatische Detektion der getrennten Verbindungen aus dem Bild durch ein tragbares Gerät des Benutzers, wobei die Eingabe analytischer Daten aus Schritt (b) ein Importieren von Daten aus dem tragbaren Gerät umfasst.

12. Verfahren nach einem der Ansprüche 1 bis 5, wobei das in Schritt (a) ausgewählte Verfahren die Hochleistungsflüssigchromatographie ist, wobei die Auswahl außerdem die Wahl eines Chromatographiemodus umfasst, der aus Folgendem ausgewählt ist:

   - Normalphasenflüssigchromatographie (NPLC),
   - Umkehrphasenflüssigchromatographie (RPLC),
   - hydrophile Interaktionschromatographie (HILIC),
   - hydrophobe Interaktionschromatographie (HIC).

13. Verfahren nach Anspruch 12, wobei die in Schritt (b) eingegebenen analytischen Chromatographiedaten analytische Flüssigchromatographiedaten sind, die mit einem Referenztrennwerkzeug erhalten wurden.

14. Verfahren nach Anspruch 13, wobei die Tabelle der verfügbaren Trennwerkzeuge ein Trennwerkzeug umfasst, das mit dem Referenztrennwerkzeug identisch ist, und Schritt (c) die Auswahl des Werkzeugs und die Berechnung der Betriebsbedingungen der präparativen Flüssigchromatographie für das Trennwerkzeug umfasst.

15. Verfahren nach Anspruch 13, wobei die Tabelle verfügbarer Trennwerkzeuge kein Trennwerkzeug enthält, das mit dem Referenztrennwerkzeug identisch ist, und Schritt (d) die Auswahl eines Trennwerkzeugs mit einer stationären Phase, die sich von der des Referenzwerkzeugs unterscheidet, durch Vergleich von Ähnlichkeiten zwischen der stationären Phase des Referenzwerkzeugs und der stationären Phase der verfügbaren Trennwerkzeuge, oder die Auswahl eines Trennwerkzeugs, das die gleiche stationäre Phase wie das Referenzwerkzeug umfasst, und die Berechnung der Betriebsbedingungen der präparativen Flüssigchromatographie im Mehrfachinjektionsmodus unter Minimierung der Anzahl der Injektionen.

16. Verfahren nach einem der Ansprüche 6 bis 15, umfassend einen Schritt der Berechnung der Trennung durch Dünnschichtchromatographie oder durch Hochleistungsflüssigchromatographie bei Iso-Elution, um andere analytische Bedingungen zu bestimmen.

17. Verfahren nach einem der Ansprüche 6 bis 16, wobei die Auswahl und die Berechnung von Schritt (d) die für jedes starke Lösungsmittel spezifische Elutionskraft berücksichtigen.

18. Verfahren nach einem der Ansprüche 1 bis 4, umfassend die Durchführung eines Trennversuchs mit einer Vielzahl von Trennwerkzeugen und die Auswahl des Trennwerkzeugs mit dem besten Trennpotenzial aus diesen Werkzeugen.

19. Verfahren nach Anspruch 18, wobei die Tabelle der verfügbaren Trennwerkzeuge ein Trennwerkzeug umfasst, das mit dem Werkzeug mit dem besten Trennpotenzial identisch ist, und Schritt (d) die Auswahl des Werkzeugs und die Berechnung der Betriebsbedingungen der präparativen Flüssigchromatographie für das Trennwerkzeug umfasst.

20. Verfahren nach Anspruch 18, wobei die Tabelle verfügbarer Trennwerkzeuge kein Trennwerkzeug enthält, das mit dem Werkzeug mit dem besten Trennpotenzial identisch ist, und Schritt (d) die Auswahl eines Trennwerkzeugs, das dieselbe stationäre Phase wie das Werkzeug mit dem besten Trennpotenzial umfasst, und die Berechnung der Betriebsbedingungen der präparativen Flüssigchromatographie im Mehrfachinjektionsmodus unter Minimierung der Anzahl der Injektionen umfasst.

21. Verfahren nach einem der Ansprüche 1 bis 20, umfassend eine Sequenzierung von mindestens zwei Reihen von Schritten (a) bis (d) mit zwei verschiedenen analytischen Flüssigchromatographieverfahren und/oder -modi.

22. Verfahren nach Anspruch 21, wobei die Sequenzierung automatisch durchgeführt wird, wenn eine erste Reihe von Schritten (a) bis (d) es nicht ermöglicht hat, eine präparative Flüssigchromatographie-Lösung zu identifizieren.

23. System zur präparativen Flüssigchromatographie, umfassend:

- einen Computer, der einen Prozessor, eine Benutzerschnittstelle und einen Bildschirm umfasst, wobei der Prozessor so konfiguriert ist, dass er die Schritte des Verfahrens gemäß einem der Ansprüche 1 bis 22 ausführt,
- ein System zur präparativen Flüssigchromatographie, das von dem Computer gesteuert wird, umfassend einen Tank für die mobile Phase, eine Pumpe, einen Injektor, ein Trennwerkzeug, einen Detektor, einen Datenrekorder und einen Fraktionssammler.

24. Computerprogrammprodukt mit Programmcode-Anweisungen, aufgezeichnet auf einem für einen Computer lesbaren Träger, **dadurch gekennzeichnet, dass** es Anweisungen zur Durchführung des Verfahrens gemäß einem der Ansprüche 1 bis 22 für ein System zur präparativen Flüssigchromatographie gemäß Anspruch 23 umfasst.

## Claims

1. Method for controlling preparative liquid chromatography, comprising the following steps, at least a part of said steps being implemented by a computer comprising a processor and a display screen coupled to said processor:

(a) selecting, by means of an interface, an analytical liquid chromatography method from among thin layer chromatography (TLC) and high performance liquid chromatography (HPLC),
(b) inputting analytical liquid chromatography data obtained by the method selected at step (a) for a product to be purified,
(c) accessing a table of separating tools available to the user to implement said preparative liquid chromatography, said tools being columns, cartridges, or other chromatography means comprising a stationary phase,
(d) from said analytical liquid chromatography data and table of available separating tools, selecting an optimal separating tool from said table and computing preparative liquid chromatography operating conditions for said selected separating tool.

2. Method according to claim 1, further comprising a step of entering the amount of product to be purified.

3. Method according to one of claims 1 or 2, further comprising a step of selecting the mode of introduction of the product to be purified into the selected separating tool, said mode of introduction being selected from introduction in solution or solid deposition.

4. Method according to one of claims 1 to 3, comprising a step of validation of the computation by a user and, after said validation, a step of launching the preparative liquid chromatography on the selected separating tool.

5. Method according to one of claims 1 to 4, comprising the triggering by a user of an acceleration of the preparative liquid chromatography, step (d) comprising the computation of optimised operating conditions while taking account of the maximum flow rate and the limit pressure of the preparative liquid chromatography system in which the selected separating tool is implemented.

6. Method according to one of claims 1 to 5, wherein the method selected at step (a) is thin layer chromatography (TLC) and step (b) comprises the input of analytical data obtained on a thin layer chromatography plate.

7. Method according to claim 6, wherein the selection and the computation implemented at step (d) take into account four different cases according to the retention factor (Rf) values of the plate:

$$0.01 < Rf < 0.07,$$

$$0.08 < Rf < 0.4,$$

$$0.4 < Rf < 0.9,$$

$$0.9 < Rf < 1.0$$

8. Method according to claim 7, comprising an adaptation of the shape of the elution gradient to each value by a volume difference factor ($\Delta CV$) while taking account of the fact that a same factor ($\Delta CV$) corresponds to differences in retention factor ($\Delta Rf$) different in each of said four zones.

9. Method according to one of claims 6 to 8, wherein the selection and the computation implemented at step (d) take into account from one to all of the compounds of interest spread out over the whole of the plate.

10. Method according to one of claims 6 to 9, wherein step (d) takes into account the difference ($\Delta \varepsilon °$) between the eluant forces of the solvents used in the preparative liquid chromatography and the non-linear variation of the eluant force of a mixture of solvents as a function of the composition of said mixture.

11. Method according to one of claims 6 to 10, comprising the acquisition of an image of a thin layer chromatography plate and the automatic detection, from said image, of the compounds separated by a portable apparatus of the user, the input of analytical data of step (b) comprising an importation of data from said portable apparatus.

12. Method according to one of claims 1 to 5, wherein the method selected at step (a) is high performance liquid chromatography, the selection further comprising the choice of a chromatography mode from among:

 - normal phase liquid chromatography (NPLC),
 - reverse phase liquid chromatography (RPLC),
 - hydrophilic interaction chromatography (HILIC),
 - hydrophobic interaction chromatography (HIC).

13. Method according to claim 12, wherein the analytical chromatography data entered at step (b) are analytical liquid chromatography data obtained on a reference separating tool.

14. Method according to claim 13, wherein the table of available separating tools comprises a separating tool identical to the reference separating tool, and step (c) comprises the selection of said tool and the computation of the preparative liquid chromatography operating conditions for said separating tool.

15. Method according to claim 13, wherein the table of available separating tools does not include a separating tool identical to the reference separating tool, and step (d) comprises the selection of a separating tool having a stationary phase different from that of the reference tool by comparison of similarities between the stationary phase of the reference tool with the stationary phase of the available separating tools, or the selection of a separating tool comprising the same stationary phase as the reference tool and the computation of the preparative liquid chromatography operating conditions in multi-injection mode while minimising the number of injections.

16. Method according to one of claims 6 to 15, comprising a step of computation of separation by thin layer chromatography or by high performance liquid chromatography at iso-elution to determine other analytical conditions.

17. Method according to one of claims 6 to 16, wherein the selection and the computation of step (d) take into account the eluant force specific to each strong solvent.

18. Method according to one of claims 1 to 4, comprising the implementation of a separation test on a plurality of separating tools and the selection of the separating tool having the best separation potential from among said tools.

**19.** Method according to claim 18, wherein the table of available separating tools comprises a separating tool identical to the tool having the best separation potential, and step (d) comprises the selection of said tool and the computation of the preparative liquid chromatography operating conditions for said separating tool.

**20.** Method according to claim 18, wherein the table of available separating tools does not include a separating tool identical to the tool having the best separation potential, and step (d) comprises the selection of a separating tool comprising the same stationary phase as the tool having the best separation potential and the computation of the preparative liquid chromatography operating conditions in multi-injection mode while minimising the number of injections.

**21.** Method according to one of claims 1 to 20, comprising a sequencing of at least two series of steps (a) to (d), with two different analytical liquid chromatography methods and/or modes.

**22.** Method according to claim 21, wherein said sequencing is carried out automatically when a first series of steps (a) to (d) has not made it possible to identify a preparative liquid chromatography solution.

**23.** Preparative liquid chromatography system, comprising:

- a computer comprising a processor, a user interface and a display screen, the processor being configured to implement the steps of the method according to one of claims 1 to 22,
- a preparative liquid chromatography system controlled by said computer, comprising a mobile phase tank, a pump, an injector, a separating tool, a detector, a data recorder and a fraction collector.

**24.** Computer programme product comprising programme code instructions recorded on a support readable by a computer, **characterised in that** it comprises instructions for the implementation of the method according to one of claims 1 to 22 for a preparative liquid chromatography system according to claim 23.

**FIGURE 1**

**FIGURE 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7686959 B
- US 6413431 B